# EUROPEAN PATENT SPECIFICATION

(11) **EP 4 353 495 B1**
(45) Date of publication and mention of the grant of the patent: **13.08.2025**
(21) Application number: 23199297.5
(22) Date of filing: 25.09.2023
(51) Int. Cl.: B60C 11/00, B60C 11/03, B60C 19/00

(54) **TIRE**
REIFEN
PNEUMATIQUE

(30) Priority: 14.10.2022 JP 2022165429
(43) Date of publication of application: 17.04.2024
(73) Proprietor: Sumitomo Rubber Industries, Ltd., Kobe-shi, Hyogo 651-0072 (JP)
(72) Inventor: OKABAYASHI, SHIHO, Kobe-shi, 651-0072 (JP)
(74) Representative: Manitz Finsterwald Patent- und Rechtsanwaltspartnerschaft mbB

(56) References cited:
- JP-B2- 6 852 568
- US-A1- 2008 105 347
- US-A1- 2022 073 713

## Description

### BACKGROUND OF THE INVENTION

### Field of the Invention

The present invention relates to a tire.

### Background Art

A tire comes into contact with a road surface at a tread thereof. The tread is worn. The wear of the tread influences the tire performance. Studies have been conducted to improve wear resistance (for example, Japanese Laid-Open Patent Publication No. 2018-199456).

The tread includes a cap portion which comes into contact with a road surface. The cap portion is formed from a crosslinked rubber for which wear resistance and grip performance are taken into consideration. When a vehicle corners at a speed of 80 km/h or higher, wear tends to progress at an outer shoulder portion (portion including a land portion located on the outer side in the width direction of the vehicle when the tire is mounted to the vehicle) in the cap portion.

If the stiffness of the crosslinked rubber forming the cap portion is increased, the tire can suppress the progress of wear. The tire can have improved wear resistance. However, the sound of a road surface hitting the cap portion may become louder, and noise performance may decrease.
US 2008/0105347 A1 discloses a tire comprising the features according to the preamble of claim 1.
US 2022/0073713 A1 discloses a tire comprising features according to a related technology.
JP 6 852568 B2 also discloses a tire comprising features according to a related technology.

The present invention has been made in view of such circumstances. An object of the present invention is to provide a tire that can achieve improvement of wear resistance without decreasing noise performance.

### SUMMARY OF THE INVENTION

A tire according to the present invention is a tire including a tread extending in a circumferential direction and having an outer circumferential surface that is a tread surface. The tread has a plurality of circumferential grooves aligned in an axial direction and dividing the tread into a plurality of land portions. The plurality of circumferential grooves include a first shoulder circumferential groove located on an outer side in a width direction of a vehicle when the tire is mounted to the vehicle, and a second shoulder circumferential groove located on an inner side in the width direction of the vehicle when the tire is mounted to the vehicle. The land portion located outward of the first shoulder circumferential groove in the axial direction is a first shoulder land portion, and the land portion located outward of the second shoulder circumferential groove in the axial direction is a second shoulder land portion. The tread includes a cap portion configured to come into contact with a road surface, and a base portion located radially inward of the cap portion and covered with the cap portion. The cap portion includes an outer cap portion located on the outer side in the width direction of the vehicle when the tire is mounted to the vehicle, and an inner cap portion located on the inner side in the width direction of the vehicle when the tire is mounted to the vehicle. A 300% modulus of the inner cap portion is not less than 5.0 MPa. A 300% modulus of the outer cap portion is higher than the 300% modulus of the inner cap portion, and is not greater than 9.0 MPa. The first shoulder land portion includes a boundary between the outer cap portion and the inner cap portion.

According to the present invention, a tire that can achieve improvement of wear resistance without decreasing noise performance is obtained.

### BRIEF DESCRIPTION OF THE DRAWINGS

FIG. 1 is a cross-sectional view showing a part of a tire according to an embodiment of the present invention;
FIG. 2 is a development showing a part of a tread pattern;
FIG. 3 is a cross-sectional view showing a portion at a first shoulder circumferential groove; and
FIG. 4 is a cross-sectional view showing a portion at a first shoulder land portion.

### DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as a standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section of the tire obtained by cutting the tire along a plane including a rotation axis. In this measurement, the tire is set such that the distance between right and left beads is equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a rubber composition refers to a composition that is obtained by mixing a base rubber and chemicals in a kneading machine such as a Banbury mixer and that contains the uncrosslinked base rubber. A crosslinked rubber refers to a crosslinked product, of the rubber composition, obtained by pressurizing and heating the rubber composition. The crosslinked rubber contains a crosslinked product of the base rubber. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a 300% modulus of a component formed from a crosslinked rubber, of the components included in the tire, means the tensile stress at 300% elongation specified in JIS K6251. The 300% modulus is measured according to the standards of JIS K6251. In this measurement, a test piece is sampled from the tire such that the length direction thereof coincides with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the 300% modulus is represented as a 300% modulus at 100°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Outline of Embodiments of Present Invention]

### [Configuration 1]

A tire according to an aspect of the present invention is a tire including a tread extending in a circumferential direction and having an outer circumferential surface that is a tread surface, wherein: the tread has a plurality of circumferential grooves aligned in an axial direction and dividing the tread into a plurality of land portions; the plurality of circumferential grooves include a first shoulder circumferential groove located on an outer side in a width direction of a vehicle when the tire is mounted to the vehicle, and a second shoulder circumferential groove located on an inner side in the width direction of the vehicle when the tire is mounted to the vehicle; the land portion located outward of the first shoulder circumferential groove in the axial direction is a first shoulder land portion; the land portion located outward of the second shoulder circumferential groove in the axial direction is a second shoulder land portion; the tread includes a cap portion configured to come into contact with a road surface, and a base portion located radially inward of the cap portion and covered with the cap portion; the cap portion includes an outer cap portion located on the outer side in the width direction of the vehicle when the tire is mounted to the vehicle, and an inner cap portion located on the inner side in the width direction of the vehicle when the tire is mounted to the vehicle; a 300% modulus of the inner cap portion is not less than 5.0 MPa; a 300% modulus of the outer cap portion is higher than the 300% modulus of the inner cap portion, and is not greater than 9.0 MPa; and the first shoulder land portion includes a boundary between the outer cap portion and the inner cap portion.

By forming the tire as described above, an axially outer portion of the first shoulder land portion to which a large load is applied when the vehicle corners at a speed of 80 km/h or higher is composed of the outer cap portion having a higher stiffness. At the cap portion of the tire, wear during cornering at a high speed is suppressed. Since a portion of the cap portion other than the axially outer portion of the first shoulder land portion is composed of the inner cap portion having a lower stiffness, the sound of a road surface hitting the cap portion is effectively reduced. The tire can maintain good noise performance.

The tire can achieve improvement of wear resistance without decreasing noise performance.

### [Configuration 2]

Preferably, in the tire described in [Configuration 1] above, an end, on the tread surface side, of the boundary between the outer cap portion and the inner cap portion is a first boundary end, an end, on the base portion side, of the boundary is a second boundary end, the first shoulder circumferential groove includes a groove bottom, an outer groove wall located on an outer side in the axial direction, and an inner groove wall located on an inner side in the axial direction, a boundary between the groove bottom and the outer groove wall is a reference position of the first shoulder circumferential groove, a distance in the axial direction from the reference position of the first shoulder circumferential groove to the first boundary end is not less than 3 mm, and a ratio of the distance in the axial direction to a ground-contact width of the first shoulder land portion is not greater than 20%.

By forming the tire as described above, the tire can achieve improvement of wear resistance without decreasing noise performance.

### [Configuration 3]

Preferably, in the tire described in [Configuration 1] or [Configuration 2] above, in a meridian cross-section of the tire, a distance in the axial direction from an equator plane to the boundary between the outer cap portion and the inner cap portion gradually increases from the first boundary end toward the second boundary end.

By forming the tire as described above, the stiffness difference in the first shoulder land portion can be gradually changed in the tire, so that occurrence of uneven wear at the first shoulder land portion can be effectively suppressed. The outer cap portion of the tire can sufficiently exhibit its function. The tire can achieve improvement of wear resistance without decreasing noise performance.

### [Configuration 4]

Preferably, in the tire described in [Configuration 2] or [Configuration 3] above, in the meridian cross-section of the tire, an angle formed between a straight line passing through the first boundary end and the second boundary end and a tangent line tangent to the tread surface at the first boundary end is not less than 5 degrees and not greater than 80 degrees.

By forming the tire as described above, the outer cap portion can sufficiently exhibit its function. The tire can achieve improvement of wear resistance without decreasing noise performance.

### [Details of Embodiments of Present Invention]

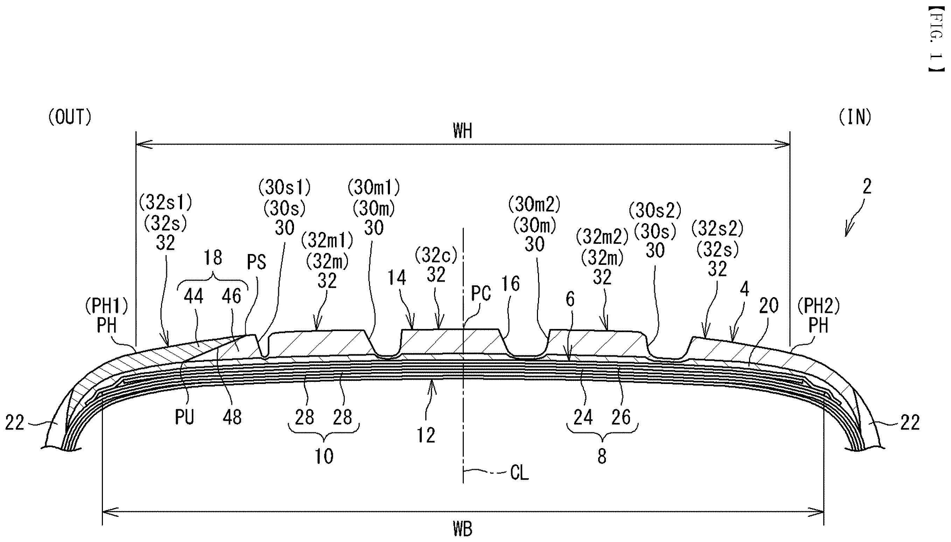

FIG. 1 shows a part of a tire 2 according to an embodiment of the present invention. The tire 2 is a pneumatic tire for a passenger car.

FIG. 1 shows a part of a cross-section (hereinafter, meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

FIG. 1 shows a tread portion of the tire 2. The tread portion includes a tread 4, a band 6, a belt 8, a carcass 10, and an inner liner 12. In addition to these components, the tire 2 includes components such as beads and clinches, which are not shown.

The components other than the tread 4 have a general configuration as a component of a tire. The detailed description of the components other than the tread 4 is omitted.

The tread 4 is formed from a crosslinked rubber. The tread 4 is located radially outward of the tire 2 and extends in the circumferential direction. The outer circumferential surface of the tread 4 is a tread surface 14. The tire 2 comes into contact with a road surface at the tread surface 14.

Grooves 16 are formed on the tread 4. Accordingly, a tread pattern is formed.

In FIG. 1, a position indicated by reference character PC is the point of intersection of the tread surface 14 and the equator plane CL. The point of intersection PC is the equator of the tire 2. In the case where the groove 16 is located on the equator plane CL, the equator PC is specified on the basis of a virtual tread surface obtained on the assumption that the groove 16 is not provided thereon. The equator PC is also a radially outer end of the tire 2.

The tread 4 includes a cap portion 18 and a base portion 20.

The cap portion 18 includes the tread surface 14. The cap portion 18 comes into contact with a road surface. The cap portion 18 is formed from a crosslinked rubber for which grip performance and wear resistance are taken into consideration. Although described later, the cap portion 18 is formed using two crosslinked rubbers having different stiffnesses.

The base portion 20 is located radially inward of the cap portion 18. The entirety of the base portion 20 is covered with the cap portion 18. The base portion 20 is formed from a crosslinked rubber for which low heat generation properties are taken into consideration.

Sidewalls 22 which form the side surfaces of the tire 2 are connected to the ends of the tread 4, respectively. Each sidewall 22 is located radially inward of the tread 4. The sidewall 22 is located axially outward of the carcass 10. The sidewall 22 is formed from a crosslinked rubber for which cut resistance is taken into consideration.

Although not shown, a clinch which comes into contact with a rim is provided radially inward of each sidewall 22. A bead is provided axially inward of the clinch.

As shown in FIG. 1, the base portion 20 is located radially outward of the band 6. The base portion 20 covers the band 6. The belt 8 is located radially inward of the band 6. The band 6 shown in FIG. 1 covers the belt 8.

The band 6 is located between the tread 4 and the belt 8 in the radial direction. The band 6 is stacked on the belt 8. The band 6 of the tire 2 is a full band. The band 6 may further include a pair of edge bands placed so as to be spaced apart from each other in the axial direction. The band 6 may be composed of only a pair of edge bands.

The band 6 includes a helically wound band cord which is not shown. The band cord extends substantially in the circumferential direction. A cord formed from an organic fiber is used as the band cord. Examples of the organic fiber include nylon fibers, rayon fibers, polyester fibers, and aramid fibers.

In the axial direction, each end of the band 6 is located outward of an end of the belt 8. The length from the end of the band 6 to the end of the belt 8 is not less than 3 mm and not greater than 7 mm.

The band 6 has a jointless structure. The band 6 holds the belt 8.

The belt 8 is located between the band 6 and the carcass 10 in the radial direction. The belt 8 is stacked on the carcass 10.

The belt 8 includes an inner layer 24 and an outer layer 26. The inner layer 24 is stacked on the carcass 10. The outer layer 26 is located radially outward of the inner layer 24, and is stacked on the inner layer 24. Each end of the outer layer 26 is located axially inward of an end of the inner layer 24. The length from the end of the outer layer 26 to the end of the inner layer 24 is not less than 3 mm and not greater than 10 mm.

The tire 2 can have one or more layers provided between the inner layer 24 and the outer layer 26. From the viewpoint of mass reduction, the belt 8 is preferably composed of two layers that are the inner layer 24 and the outer layer 26.

Each of the inner layer 24 and the outer layer 26 includes a large number of belt cords aligned with each other, which are not shown. Each belt cord is tilted relative to the equator plane CL. The material of the belt cord is steel.

In FIG. 1, a length indicated by reference character WB is the axial width of the belt 8. The axial width WB is the distance in the axial direction from a first end to a second end of the belt 8. The above-described equator plane CL intersects the belt 8 at the center of the axial width WB of the belt 8.

In the tread portion, the carcass 10 is located between the belt 8 and the inner liner 12. Although not shown, the carcass 10 extends on and between a pair of the beads.

The carcass 10 includes at least one carcass ply 28. The carcass 10 of the tire 2 includes two carcass plies 28. Each of the two carcass plies 28 is turned up at the bead (not shown).

Each carcass ply 28 includes a large number of carcass cords aligned with each other, which are not shown. These carcass cords intersect the equator plane CL. The carcass 10 of the tire 2 has a radial structure. In the tire 2, a cord formed from an organic fiber is used as each carcass cord. Examples of the organic fiber include nylon fibers, rayon fibers, polyester fibers, and aramid fibers.

The inner liner 12 is located inward of the carcass 10. The inner liner 12 forms an inner surface of the tire 2. The inner liner 12 is formed from a crosslinked rubber that has an excellent air blocking property. The inner liner 12 maintains the internal pressure of the tire 2.

In FIG. 1, each position indicated by reference character PH is a position on the tread surface 14. The position PH corresponds to an axially outer end of a ground-contact surface, of the tire 2, which comes into contact with a road surface.

The ground-contact surface for specifying the position PH is obtained, for example, using a ground-contact surface shape measuring device (not shown). The ground-contact surface is obtained by setting the camber angle of the tire 2 in the standardized state to 0°, applying a standardized load as a vertical load to the tire 2, and bringing the tire 2 into contact with a flat surface, on this device. The position, on the tread surface 14, corresponding to each axially outer end of the ground-contact surface obtained thus is the above-described position PH. In the present invention, the position PH is a ground-contact end.

In FIG. 1, the ground-contact end PH located on the left side is a first ground-contact end PH1, and the ground-contact end PH located on the right side is a second ground-contact end PH2. When the tire 2 is mounted to a vehicle, the first ground-contact end PH1 is located on the outer side in the width direction of the vehicle. In FIG. 1, "OUT" represents the outer side in the width direction of the vehicle, and "IN" represents the inner side in the width direction of the vehicle.

In FIG. 1, a length indicated by reference character WH is the distance in the axial direction from the first ground-contact end PH1 to the second ground-contact end PH2.

The ratio (WH/WB) of the distance WH in the axial direction obtained in the tire 2 in the standardized state to the axial width WB of the belt 8 is not less than 85% and not greater than 95%.

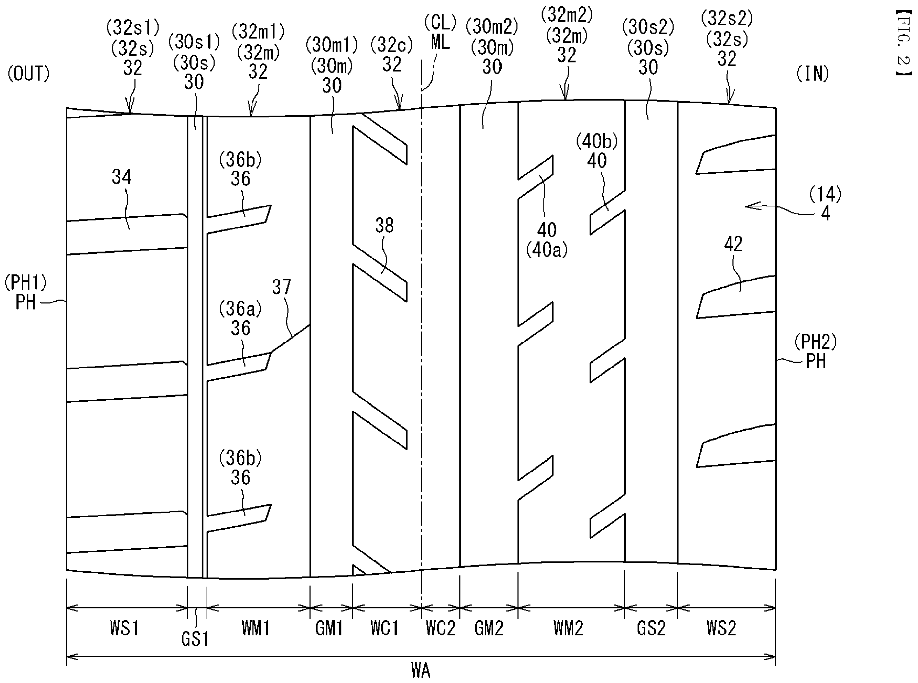

FIG. 2 shows a part of the tread pattern of the tire 2. As described above, the grooves 16 are formed on the tread 4, whereby the tread pattern is formed. Among the grooves 16 which form the tread pattern, grooves having a groove width of 1.5 mm or less are also referred to as sipes.

The tread pattern shown in FIG. 2 is an example of the tread pattern. On the tread 4 of the tire 2, a tread pattern different from the tread pattern shown in FIG. 2 may be formed.

In FIG. 2, a length indicated by a double-headed arrow WA is a ground-contact width of the tread 4. The ground-contact width WA is the distance in the axial direction from the first ground-contact end PH1 to the second ground-contact end PH2. Although not shown, the ground-contact width WA is represented as the ground-contact width of the above-described ground-contact surface obtained for specifying the ground-contact end PH.

In FIG. 2, an alternate long and short dash line ML represents the equator plane CL shown in FIG. 1. When it is difficult to specify the equator plane CL on the ground-contact surface, the straight line ML is represented by a center line of the ground-contact width WA.

The tread pattern of the tire 2 includes a circumferential groove 30 continuously extending in the circumferential direction. The tread 4 of the tire 2 has a plurality of such circumferential grooves 30 aligned in the axial direction. The plurality of circumferential grooves 30 divide the tread 4 into a plurality of land portions 32. On the tread 4 of the tire 2, four circumferential grooves 30 are formed, whereby five land portions 32 are formed therein so as to be aligned in the axial direction.

Among the four circumferential grooves 30, the circumferential groove 30 located on each outermost side in the axial direction is a shoulder circumferential groove 30s. The shoulder circumferential groove 30s located on the first ground-contact end PH1 side is a first shoulder circumferential groove 30s1, and the shoulder circumferential groove 30s located on the second ground-contact end PH2 side is a second shoulder circumferential groove 30s2.

The circumferential groove 30 located axially inward of each shoulder circumferential groove 30s is a middle circumferential groove 30m. The middle circumferential groove 30m located between the first shoulder circumferential groove 30s1 and the equator plane CL is a first middle circumferential groove 30m1, and the middle circumferential groove 30m located between the second shoulder circumferential groove 30s2 and the equator plane CL is a second middle circumferential groove 30m2.

Among the five land portions 32, the land portion 32 located on each outermost side in the axial direction is a shoulder land portion 32s. The land portion 32 located outward of the first shoulder circumferential groove 30s1 in the axial direction is a first shoulder land portion 32s1, and the land portion 32 located outward of the second shoulder circumferential groove 30s2 in the axial direction is a second shoulder land portion 32s2. The first shoulder land portion 32s1 includes the first ground-contact end PH1, and the second shoulder land portion 32s2 includes the second ground-contact end PH2.

Among the five land portions 32, the land portion 32 located axially inward of each shoulder land portion 32s is a middle land portion 32m. The land portion 32 located between the first shoulder circumferential groove 30s1 and the first middle circumferential groove 30m1 is a first middle land portion 32m1, and the land portion 32 located between the second shoulder circumferential groove 30s2 and the second middle circumferential groove 30m2 is a second middle land portion 32m2.

Among the five land portions 32, the land portion 32 located axially inward of the middle land portions 32m is a center land portion 32c. The center land portion 32c is located between the first middle circumferential groove 30m1 and the second middle circumferential groove 30m2. The center land portion 32c of the tire 2 is located on the equator plane CL.

On the first shoulder land portion 32s1, a first shoulder axial groove 34 is formed as an axial groove. The first shoulder axial groove 34 has a groove width of at least 2.0 mm or greater. The first shoulder axial groove 34 extends between the first ground-contact end PH1 and the first shoulder circumferential groove 30s1. The first shoulder axial groove 34 extends substantially in the axial direction.

A plurality of such first shoulder axial grooves 34 are formed on the first shoulder land portion 32s1. These first shoulder axial grooves 34 are arranged at intervals in the circumferential direction.

In the present invention, a groove extending substantially in the axial direction means that an angle of the groove with respect to the axial direction is not greater than 15 degrees.

On the first middle land portion 32m1, a first middle axial groove 36 is formed as an axial groove. The first middle axial groove 36 has a groove width of at least 2.0 mm or greater. The groove width of the first middle axial groove 36 is smaller than the groove width of the first shoulder axial groove 34.

The first middle axial groove 36 has an end (hereinafter, first end) in the first middle land portion 32m1. The first middle axial groove 36 extends between the first end and the first shoulder circumferential groove 30s1. The first middle axial groove 36 is connected at a second end thereof to the first shoulder circumferential groove 30s1. The first middle axial groove 36 extends substantially in the axial direction.

A plurality of such first middle axial grooves 36 are formed on the first middle land portion 32m1. These first middle axial grooves 36 are arranged at intervals in the circumferential direction. Each first middle axial groove 36 is placed so as to oppose the first shoulder axial groove 34 across the first shoulder circumferential groove 30s1.

As shown in FIG. 2, the plurality of first middle axial grooves 36 include first middle axial grooves 36a each connected to the first middle circumferential groove 30m1 by a sipe 37. The first middle axial grooves 36 include the first middle axial grooves 36a each connected to the first middle circumferential groove 30m1 by the sipe 37, and first middle axial grooves 36b not connected to the first middle circumferential groove 30m1. The first middle axial grooves 36a and the first middle axial grooves 36b are alternately arranged in the circumferential direction.

On the center land portion 32c, a center axial groove 38 is formed as an axial groove. The center axial groove 38 has a groove width of at least 2.0 mm or greater. The center axial groove 38 has a groove width substantially equal to the groove width of the first middle axial groove 36.

The center axial groove 38 has an end (hereinafter, first end) in the center land portion 32c. The center axial groove 38 extends between the first end and the first middle circumferential groove 30m1. The center axial groove 38 is connected at a second end thereof to the first middle circumferential groove 30m1.

The second end of the center axial groove 38 is located axially outward of the equator plane CL. The center axial groove 38 is located between the first middle circumferential groove 30m1 and the equator plane CL.

The center axial groove 38 is tilted relative to the axial direction. The second end of the center axial groove 38 is positioned closer to the above-described first middle axial groove 36a than the first end thereof is.

A plurality of such center axial grooves 38 are formed on the center land portion 32c. These center axial grooves 38 are arranged at intervals in the circumferential direction. Each center axial groove 38 is located between two first middle axial grooves 36 adjacent to each other in the circumferential direction.

On the second middle land portion 32m2, a second middle axial groove 40 is formed as an axial groove. The second middle axial groove 40 has a groove width of at least 2.0 mm or greater. The second middle axial groove 40 has a groove width substantially equal to the groove width of the center axial groove 38.

As shown in FIG. 2, the second middle axial groove 40 is formed on each of an inner portion and an outer portion of the second middle land portion 32m2. In the tire 2, the second middle axial groove 40 formed on the inner portion of the second middle land portion 32m2 is also referred to as inner middle axial groove 40a, and the second middle axial groove 40 formed on the outer portion of the second middle land portion 32m2 is also referred to as outer middle axial groove 40b.

Each of the inner middle axial groove 40a and the outer middle axial groove 40b has an end (hereinafter, first end) in the second middle land portion 32m2. The inner middle axial groove 40a extends between the first end and the second middle circumferential groove 30m2. The inner middle axial groove 40a is connected at a second end thereof to the second middle circumferential groove 30m2. The outer middle axial groove 40b extends between the first end and the second shoulder circumferential groove 30s2. The outer middle axial groove 40b is connected at a second end thereof to the second shoulder circumferential groove 30s2.

The inner middle axial groove 40a and the outer middle axial groove 40b are tilted relative to the axial direction. The direction of tilt of the inner middle axial groove 40a and the direction of tilt of the outer middle axial groove 40b are the same. The direction of tilt of the inner middle axial groove 40a and the outer middle axial groove 40b is opposite to the direction of tilt of the center axial groove 38.

A plurality of such inner middle axial grooves 40a and a plurality of such outer middle axial grooves 40b are formed on the second middle land portion 32m2. The inner middle axial grooves 40a and the outer middle axial grooves 40b are alternately arranged in the circumferential direction. A pair of second middle axial grooves 40 composed of the inner middle axial groove 40a and the outer middle axial groove 40b are located between two center axial grooves 38 adjacent to each other in the circumferential direction.

On the second shoulder land portion 32s2, a second shoulder axial groove 42 is formed as an axial groove. The second shoulder axial groove 42 has a groove width of at least 2.0 mm or greater. The second shoulder axial groove 42 has a groove width substantially equal to the groove width of the first shoulder axial groove 34.

The second shoulder axial groove 42 has an end (hereinafter, first end) in the second shoulder land portion 32s2. The second shoulder axial groove 42 extends between the first end and the second ground-contact end PH2. The second shoulder axial groove 42 is not connected to the second shoulder circumferential groove 30s2.

The second shoulder axial groove 42 extends substantially in the axial direction. A plurality of such second shoulder axial grooves 42 are formed on the second shoulder land portion 32s2. These second shoulder axial grooves 42 are arranged at intervals in the circumferential direction. Each second shoulder axial groove 42 is located between two first shoulder axial grooves 34 adjacent to each other in the circumferential direction.

In FIG. 2, a double-headed arrow GS1 indicates the opening width of the first shoulder circumferential groove 30s1. A double-headed arrow GM1 indicates the opening width of the first middle circumferential groove 30m1. A double-headed arrow GM2 indicates the opening width of the second middle circumferential groove 30m2. A double-headed arrow GS2 indicates the opening width of the second shoulder circumferential groove 30s2. The opening widths GS1, GM1, GM2, and GS2 are specified using the above-described ground-contact surface obtained for specifying the ground-contact end PH.

In FIG. 2, a length indicated by a double-headed arrow WS1 is a ground-contact width of the first shoulder land portion 32s1. The ground-contact width WS1 is the distance in the axial direction from the first ground-contact end PH1 to the outer opening edge of the first shoulder circumferential groove 30s1. A length indicated by a double-headed arrow WM1 is a ground-contact width of the first middle land portion 32m1. The ground-contact width WM1 is the distance in the axial direction from the inner opening edge of the first shoulder circumferential groove 30s1 to the outer opening edge of the first middle circumferential groove 30m1. A length indicated by a double-headed arrow WC1 is a ground-contact width of an outer portion of the center land portion 32c. The ground-contact width WC1 is the distance in the axial direction from the inner opening edge of the first middle circumferential groove 30m1 to the equator plane CL. A length indicated by a double-headed arrow WC2 is a ground-contact width of an inner portion of the center land portion 32c. The ground-contact width WC2 is the distance in the axial direction from the equator plane CL to the inner opening edge of the second middle circumferential groove 30m2. A length indicated by a double-headed arrow WM2 is a ground-contact width of the second middle land portion 32m2. The ground-contact width WM2 is the distance in the axial direction from the outer opening edge of the second middle circumferential groove 30m2 to the inner opening edge of the second shoulder circumferential groove 30s2. A length indicated by a double-headed arrow WS2 is a ground-contact width of the second shoulder land portion 32s2. The ground-contact width WS2 is the distance in the axial direction from the outer opening edge of the second shoulder circumferential groove 30s2 to the second ground-contact end PH2.

The ground-contact widths WS1, WM1, WC1, WC2, WM2, and WS2 are specified using the above-described ground-contact surface for obtaining the ground-contact end PH.

In the tire 2, the ground-contact width WS1 of the first shoulder land portion 32s1 is larger than the ground-contact width WS2 of the second shoulder land portion 32s2. The ground-contact width WC1 of the outer portion of the center land portion 32c is larger than the ground-contact width WC2 of the inner portion of the center land portion 32c. The first middle land portion 32m1 has the ground-contact width WM1 substantially equal to the ground-contact width WM2 of the second middle land portion 32m2.

The fact that the ground-contact width WM1 and the ground-contact width WM2 are substantially equal to each other means that the ratio (WM1/WM2) of the ground-contact width WM1 to the ground-contact width WM2 is not less than 0.95 and not greater than 1.05.

The opening width GS1 of the first shoulder circumferential groove 30s1 is smaller than the opening width GS2 of the second shoulder circumferential groove 30s2. The opening width GM1 of the first middle circumferential groove 30m1 is smaller than the opening width GM2 of the second middle circumferential groove 30m2. Among the circumferential grooves 30, the circumferential groove 30 having the largest opening width is the second middle circumferential groove 30m2, and the circumferential groove 30 having the smallest opening width is the first shoulder circumferential groove 30s1.

As described above, the cap portion 18 of the tire 2 is formed using two crosslinked rubbers having different stiffnesses. The cap portion 18 includes an outer cap portion 44 and an inner cap portion 46. The outer cap portion 44 has a stiffness higher than that of the inner cap portion 46. Specifically, a 300% modulus of the inner cap portion 46 is not less than 5.0 MPa, and a 300% modulus of the outer cap portion 44 is higher than the 300% modulus of the inner cap portion 46 and is not greater than 9.0 MPa.

In FIG. 1, a position indicated by reference character PS is the end, on the tread surface 14 side, of a boundary 48 between the outer cap portion 44 and the inner cap portion 46. The end PS is also referred to as first boundary end. The first boundary end PS of the tire 2 is included in the outer surface of the land portion 32. A position indicated by reference character PU is the end, on the base portion 20 side, of the boundary 48. The end PU is also referred to as second boundary end. The second boundary end PU of the tire 2 is included in the interface between the cap portion 18 and the base portion 20.

The boundary 48 is the interface between the outer cap portion 44 and the inner cap portion 46. The cap portion 18 is composed of two components that are the outer cap portion 44 and the inner cap portion 46.

The outer cap portion 44 includes the first ground-contact end PH1, and the inner cap portion 46 includes the equator PC and the second ground-contact end PH2. When the tire 2 is mounted to the vehicle, the outer cap portion 44 is located on the outer side in the width direction of the vehicle, and the inner cap portion 46 is located on the inner side in the width direction of the vehicle.

As shown in FIG. 1, the boundary 48 between the outer cap portion 44 and the inner cap portion 46 is included in the first shoulder land portion 32s1. An axially outer portion of the first shoulder land portion 32s1 including the first ground-contact end PH1 is composed of the outer cap portion 44 having a higher stiffness. The portion of the cap portion 18 other than the portion composed of the outer cap portion 44 is composed of the inner cap portion 46 having a stiffness lower than that of the outer cap portion 44. In the first shoulder land portion 32s1 shown in FIG. 1, the first boundary end PS is included in the outer surface thereof.

In the tire 2, the axially outer portion of the first shoulder land portion 32s1 to which a large load is applied when the vehicle corners at a speed of 80 km/h or higher is composed of the outer cap portion 44 having a higher stiffness. At the cap portion 18 of the tire 2, wear during cornering at a high speed is suppressed.

Since the portion of the cap portion 18 other than the axially outer portion of the first shoulder land portion 32s1 is composed of the inner cap portion 46 having a lower stiffness, the sound of a road surface hitting the cap portion 18 is effectively reduced. The tire 2 can maintain good noise performance.

Moreover, since the 300% modulus of the inner cap portion 46 is not less than 5.0 MPa, wear of the inner cap portion 46, to which a smaller load is applied during running than to the outer cap portion 44, is also effectively suppressed.

Furthermore, since the 300% modulus of the outer cap portion 44 is not greater than 9.0 MPa, the influence of the outer cap portion 44 on noise performance is also effectively suppressed.

The tire 2 can achieve improvement of wear resistance without decreasing noise performance.

The outer cap portion 44 of the tire 2 can contribute to suppressing wear during cornering at a high speed. From the viewpoint of being able to achieve further improvement of wear resistance, the 300% modulus of the outer cap portion 44 is preferably not less than 8.0 MPa.

The inner cap portion 46 of the tire 2 can contribute to reducing the sound of a road surface hitting the cap portion 18. From the viewpoint of being able to effectively maintain good noise performance, the 300% modulus of the inner cap portion 46 is preferably not greater than 7.0 MPa.

As described above, the 300% modulus of the outer cap portion 44 is higher than the 300% modulus of the inner cap portion 46. From the viewpoint of being able to well-balance noise performance and wear resistance, the ratio of the 300% modulus of the outer cap portion 44 to the 300% modulus of the inner cap portion 46 is preferably not less than 1.1, more preferably not less than 1.2, and further preferably not less than 1.3. From the same viewpoint, this ratio is preferably not greater than 1.8, more preferably not greater than 1.7, and further preferably not greater than 1.6.

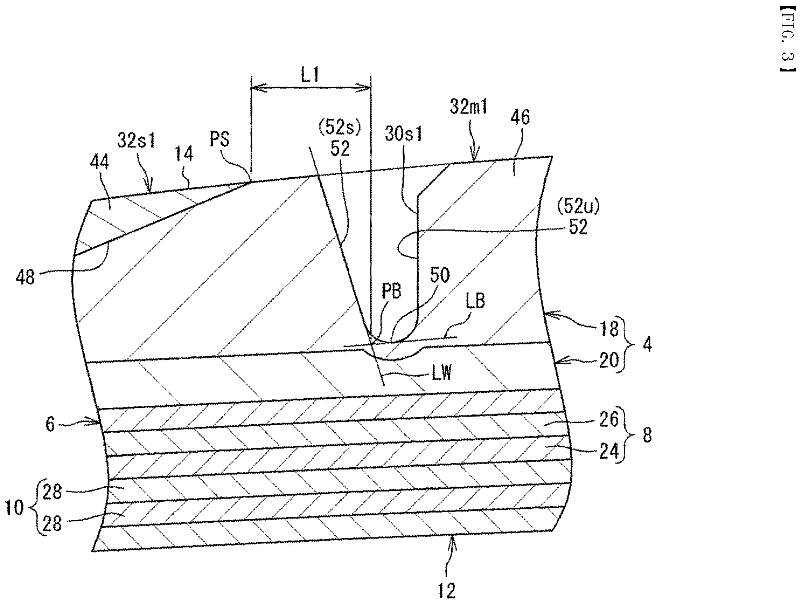

FIG. 3 shows a portion at the first shoulder circumferential groove 30s1. FIG. 3 shows a part of the meridian cross-section shown in FIG. 1.

The first shoulder circumferential groove 30s1 of the tire 2 includes a groove bottom 50 and a pair of groove walls 52 extending from the groove bottom 50 toward the tread surface 14 side. Of the pair of groove walls 52, the groove wall 52 located on the outer side in the axial direction is an outer groove wall 52s, and the groove wall 52 located on the inner side in the axial direction is an inner groove wall 52u. The first shoulder circumferential groove 30s1 includes the groove bottom 50, the outer groove wall 52s, and the inner groove wall 52u.

In FIG. 3, a position indicated by reference character PB is the boundary between the groove bottom 50 and the outer groove wall 52s. The boundary PB is represented as the point of intersection of a tangent line LB of the groove bottom 50 and an extension line LW of a contour line of the outer groove wall 52s. In the present invention, the boundary PB between the groove bottom 50 and the outer groove wall 52s is a reference position of the first shoulder circumferential groove 30s1. A length indicated by reference character L1 is the distance in the axial direction from the reference position PB to the first boundary end PS.

As shown in FIG. 3, the first boundary end PS of the boundary 48 between the outer cap portion 44 and the inner cap portion 46 is located axially outward of the first shoulder circumferential groove 30s1. The first boundary end PS is located axially outward of the reference position PB of the first shoulder circumferential groove 30s1 so as to be spaced apart therefrom by a predetermined distance. Specifically, the distance L1 in the axial direction from the reference position PB to the first boundary end PS is preferably not less than 3 mm. Accordingly, concentration of strain on the groove bottom 50 of the first shoulder circumferential groove 30s1 is suppressed. At the boundary 48, peeling of the outer cap portion 44 from the inner cap portion 46 is suppressed. The outer cap portion 44 of the tire 2 can stably exhibit its function. From this viewpoint, the distance L1 in the axial direction is more preferably not less than 4 mm.

In the tire 2, the ratio (L1/WS1) of the distance L1 in the axial direction from the reference position PB to the first boundary end PS, to the ground-contact width WS1 of the first shoulder land portion 32s1, is preferably not greater than 20%. Accordingly, in the tire 2, the stiffness difference between the outer side and the inner side in the first shoulder land portion 32s1 to which a large load is applied during cornering at a high speed can be reduced. In the tire 2, wear of the inner portion, of the first shoulder land portion 32s1, composed of the inner cap portion 46 can be effectively suppressed. From this viewpoint, the ratio (L1/WS1) is more preferably not greater than 15%.

In the tire 2, from the viewpoint of being able to achieve improvement of wear resistance without decreasing noise performance, more preferably, the distance L1 in the axial direction is not less than 3 mm, and the ratio (L1/WS1) is not greater than 20%.

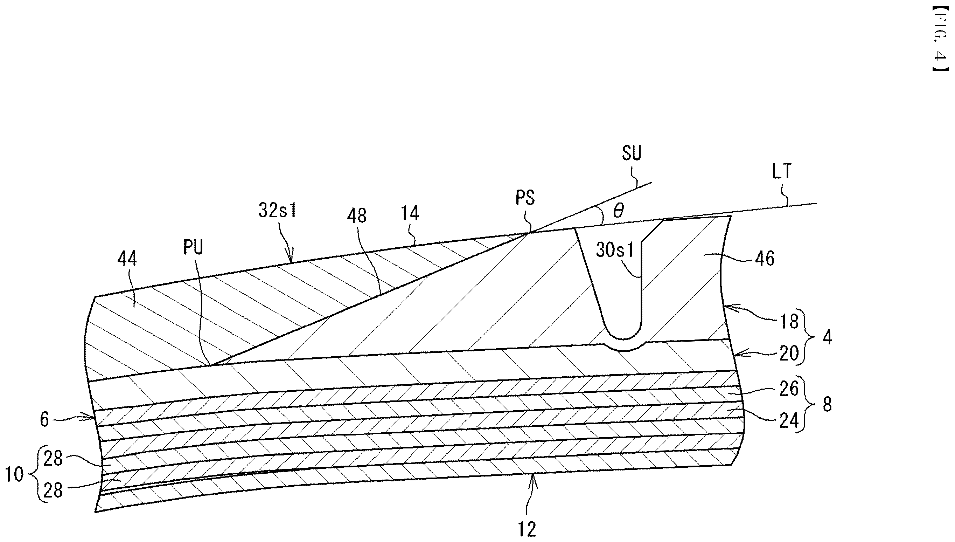

FIG. 4 shows a portion at the first shoulder land portion 32s1. FIG. 4 shows a part of the meridian cross-section shown in FIG. 1.

As shown in FIG. 4, the boundary 48 between the outer cap portion 44 and the inner cap portion 46 extends so as to be tilted relative to the axial direction. The second boundary end PU is located axially outward of the first boundary end PS. In other words, the distance in the axial direction from the equator plane CL to the boundary 48 between the outer cap portion 44 and the inner cap portion 46 gradually increases from the first boundary end PS toward the second boundary end PU.

Although not shown, the boundary 48 may be formed such that the position of the second boundary end PU coincides with the position of the first boundary end PS in the axial direction.

In the first shoulder land portion 32s1, the boundary 48 is a change of stiffness. Therefore, by forming the first shoulder land portion 32s1 such that the boundary 48 is tilted as shown in FIG. 4, the stiffness difference in the first shoulder land portion 32s1 can be gradually changed in the tire 2, so that occurrence of uneven wear at the first shoulder land portion 32s1 can be effectively suppressed. In this case, the outer cap portion 44 can sufficiently exhibit its function. From this viewpoint, the boundary 48 is preferably formed such that the distance in the axial direction from the equator plane CL to the boundary 48 between the outer cap portion 44 and the inner cap portion 46 gradually increases from the first boundary end PS toward the second boundary end PU. In other words, the boundary 48 between the outer cap portion 44 and the inner cap portion 46 in the first shoulder land portion 32s1 is preferably formed such that the second boundary end PU is located axially outward of the first boundary end PS. In this case, a contour line of the boundary 48 in the meridian cross-section may be curved, or may be represented by a straight line. In the case where the contour line is curved, from the viewpoint of suppressing exposure of the base portion 20, the contour line is preferably curved toward the base portion 20 side.

In FIG. 4, a solid line SU is a straight line passing through the first boundary end PS and the second boundary end PU. A solid line LT is a tangent line tangent to the tread surface 14 at the first boundary end PS. An angle θ is an angle formed between the straight line SU and the tangent line LT. The angle θ is an angle formed between the straight line SU passing through the first boundary end PS and the second boundary end PU, and the tangent line LT tangent to the tread surface 14 at the first boundary end PS in the meridian cross-section of the tire 2. The angle θ is also referred to as tilt angle of the boundary 48.

In the tire 2, the tilt angle θ of the boundary 48 is preferably not less than 5 degrees and not greater than 80 degrees.

When the tilt angle θ is set to be not less than 5 degrees, the first shoulder land portion 32s1 is formed such that the outer cap portion 44 has a required volume. The tire 2 can effectively suppress wear, and can appropriately control the exposure amount of the inner cap portion 46. In the tire 2, the outer cap portion 44 can sufficiently exhibit its function. From this viewpoint, the tilt angle θ is more preferably not less than 15 degrees and further preferably not less than 25 degrees.

When the tilt angle θ is set so as to be not greater than 80 degrees, the stiffness difference in the first shoulder land portion 32s1 can be gradually changed in the tire 2, so that occurrence of uneven wear at the first shoulder land portion 32s1 can be effectively suppressed. In this case as well, the outer cap portion 44 can sufficiently exhibit its function. From this viewpoint, the tilt angle θ is more preferably not greater than 70 degrees and further preferably not greater than 60 degrees.

As described above, in the tire 2, the outer cap portion 44 is provided in the first shoulder land portion 32s1. The portion of the cap portion 18 other than the outer cap portion 44 is composed of the inner cap portion 46.

From the viewpoint that the tire 2 is able to achieve improvement of wear resistance without decreasing noise performance, the ratio (WS 1/WA) of the ground-contact width WS1 of the first shoulder land portion 32s1 to the ground-contact width WA is preferably not less than 15% and not greater than 20%.

As described above, in the tire 2, the ground-contact width WS1 of the first shoulder land portion 32s1 is larger than the ground-contact width WS2 of the second shoulder land portion 32s2. In the tire 2, the outer cap portion 44, which forms a part of the first shoulder land portion 32s1, can sufficiently exhibit its function. From this viewpoint, the ratio (WS1/WS2) of the ground-contact width WS1 of the first shoulder land portion 32s1 to the ground-contact width WS2 of the second shoulder land portion 32s2 is preferably not less than 120% and not greater than 130%.

The center land portion 32c of the tire 2 is formed such that the ground-contact width WC1 of the outer portion thereof is larger than the ground-contact width WC2 of the inner portion thereof. The center land portion 32c can contribute to improvement of wear resistance without decreasing noise performance. From this viewpoint, the ratio (WC1/WC2) of the ground-contact width WC1 of the outer portion to the ground-contact width WC2 of the inner portion is preferably not less than 170% and not greater than 180%.

As shown in FIG. 1, the first shoulder circumferential groove 30s1 and the first middle circumferential groove 30m1 are located in a zone from the equator plane CL to the first ground-contact end PH1, and the second middle circumferential groove 30m2 and the second shoulder circumferential groove 30s2 are located in a zone from the equator plane CL to the second ground-contact end PH2. From the viewpoint that each of the outer cap portion 44 and the inner cap portion 46 can exhibit its function, the cap portion 18 in the zone from the equator plane CL to the first ground-contact end PH1 preferably has a stiffness higher than that of the cap portion 18 in the zone from the equator plane CL to the second ground-contact end PH2. From this viewpoint, the total (GS1 + GM1) of the opening width GS1 of the first shoulder circumferential groove 30s1 and the opening width GM1 of the first middle circumferential groove 30m1 is preferably smaller than the total (GM2 + GS2) of the opening width GM2 of the second middle circumferential groove 30m2 and the opening width GS2 of the second shoulder circumferential groove 30s2. Specifically, the ratio ((GS1 + GM1)/(GM2 + GS2)) of the total (GS1 + GM1) to the total (GM2 + GS2) is more preferably not less than 50% and not greater than 60%.

As described above, in the tire 2, among the circumferential grooves 30, the circumferential groove 30 having the largest opening width is the second middle circumferential groove 30m2. The second middle circumferential groove 30m2 is formed on the inner cap portion 46. From the viewpoint that the inner cap portion 46 can contribute to maintaining good noise performance, the ratio (GM2/WA) of the opening width GM2 of the second middle circumferential groove 30m2 to the ground-contact width WA is preferably not less than 5% and not greater than 10%.

As described above, in the tire 2, the circumferential groove 30 having the smallest opening width is the first shoulder circumferential groove 30s1. The first shoulder land portion 32s1 in which the outer cap portion 44 is provided is located axially outward of the first shoulder circumferential groove 30s1. The first shoulder circumferential groove 30s1 having the small opening width GS1 can contribute to exhibition of the function of the outer cap portion 44. From this viewpoint, the ratio (GS1/GM2) of the opening width GS1 of the first shoulder circumferential groove 30s1 to the opening width GM2 of the second middle circumferential groove 30m2 is preferably not less than 30% and not greater than 40%.

As is obvious from the above description, according to the present invention, the tire 2 that can achieve improvement of wear resistance without decreasing noise performance, is obtained.

### EXAMPLES

Hereinafter, the present invention will be described in further detail by means of examples

### [Example 1]

A pneumatic tire for a passenger car (tire designation = 235/35ZR19) having the basic structure shown in FIG. 1 and having specifications shown in Table 1 below was obtained.

A 300% modulus Mu of the inner cap portion, a 300% modulus Ms of the outer cap portion, the ratio (L1/WS1), and the tilt angle θ of the boundary were set as shown in Table 1 below.

### [Comparative Example 1]

A tire of Comparative Example 1 is a conventional tire. In Comparative Example 1, the cap portion was formed from a single crosslinked rubber. As described in the cell for "Ms" in Table 1, the 300% modulus of the cap portion was 8.0 MPa.

### [Examples 2 and 3 and Comparative Examples 2 and 3]

Tires of Examples 2 and 3 and Comparative Examples 2 and 3 were obtained in the same manner as Example 1, except that the 300% modulus Mu of the inner cap portion, the 300% modulus Ms of the outer cap portion, the ratio (L1/WS1), and the tilt angle θ of the boundary were set as shown in Table 1 below.

### [Noise Performance]

Test tires were each fitted onto a rim (size = 19×8.0J) and inflated with air to adjust the internal pressure thereof to 240 kPa. The tires were mounted to a test vehicle (passenger car). The noise in the vehicle interior was measured when the test vehicle was driven at a speed of 100 km/h on a test course having a dry asphalt surface. The results are shown in Table 1 below as indexes with the result of Comparative Example 1 being regarded as 100. The higher the value is, the better the noise performance is.

### [Wear Resistance]

Test tires were each fitted onto a rim (size = 19×8.0J) and inflated with air to adjust the internal pressure thereof to 240 kPa. The tires were mounted to a test vehicle (passenger car). The test vehicle was driven on a test course having a dry asphalt surface. After driving, a groove depth Cr of the second middle circumferential groove and a groove depth Sh of the first shoulder axial groove were measured and the ratio (Sh/Cr) was obtained. The results are shown in Table 1 below as indexes with the result of Comparative Example 1 being regarded as 100. The higher the value is, the better the wear resistance is.

**[Table 1]**

| | Comp. Ex. 1 | Comp. Ex. 2 | Comp. Ex. 3 | Ex. 2 | Ex. 3 | Ex. 1 |
|---|---|---|---|---|---|---|
| Mu [MPa] | - | 4.0 | 6.0 | 6.0 | 6.0 | 6.0 |
| Ms [MPa] | 8.0 | 8.5 | 10.0 | 8.5 | 8.5 | 8.5 |
| L1/WS1 [%] | - | 40 | 40 | 40 | 10 | 10 |
| θ [°] | - | 90 | 90 | 90 | 90 | 40 |
| Noise performance | 100 | 105 | 95 | 105 | 105 | 105 |
| Wear resistance | 100 | 95 | 105 | 103 | 106 | 110 |

As shown in Table 1, it is confirmed that, in each Example, improvement of wear resistance is achieved without decreasing noise performance. From the evaluation results, advantages of the present invention are clear.

The above-described technology capable of achieving improvement of wear resistance without decreasing noise performance can also be applied to various tires.

## Claims

1. A tire (2) comprising a tread (4) extending in a circumferential direction and having an outer circumferential surface that is a tread surface (14), wherein
the tread (4) has a plurality of circumferential grooves (30) aligned in an axial direction and dividing the tread (4) into a plurality of land portions (32),
the plurality of circumferential grooves (30) include a first shoulder circumferential groove (30s1) located on an outer side in a width direction of a vehicle when the tire (2) is mounted to the vehicle, and a second shoulder circumferential groove (30s2) located on an inner side in the width direction of the vehicle when the tire (2) is mounted to the vehicle,
the land portion (32) located outward of the first shoulder circumferential groove (30s1) in the axial direction is a first shoulder land portion (32s1),
the land portion (32) located outward of the second shoulder circumferential groove (30s2) in the axial direction is a second shoulder land portion (32s2),
the tread (4) includes a cap portion (18) configured to come into contact with a road surface, and a base portion (20) located radially inward of the cap portion (18) and covered with the cap portion (18),
the cap portion (18) includes an outer cap portion (44) located on the outer side in the width direction of the vehicle when the tire (2) is mounted to the vehicle, and an inner cap portion (46) located on the inner side in the width direction of the vehicle when the tire (2) is mounted to the vehicle, and
the first shoulder land portion (32s1) includes a boundary (48) between the outer cap portion (44) and the inner cap portion (46), **characterized in that**
a 300% modulus (Mu) of the inner cap portion (46) is not less than 5.0 MPa,
a 300% modulus (Ms) of the outer cap portion (44) is higher than the 300% modulus (Mu) of the inner cap portion (46), and is not greater than 9.0 MPa,
wherein the 300% modulus means the tensile stress at 300% elongation specified in JIS K6251, is represented as a 300% modulus at 100°C and is measured according to the standards of JIS K6251 by sampling a test piece from the tire (2) such that the length direction thereof coincides with the circumferential direction of the tire (2), or by sampling a test piece from a sheet-shaped crosslinked rubber obtained by pressurizing and heating a rubber composition, which is used for forming the component to be measured, at a temperature of 170°C for 12 minutes.

2. The tire (2) according to claim 1, wherein
an end, on the tread surface (14) side, of the boundary (48) between the outer cap portion (44) and the inner cap portion (46) is a first boundary end (PS),
an end, on the base portion (20) side, of the boundary (48) is a second boundary end (PU),
the first shoulder circumferential groove (30s1) includes a groove bottom (50), an outer groove wall (52s) located on an outer side in the axial direction, and an inner groove wall (52u) located on an inner side in the axial direction,
a boundary between the groove bottom (50) and the outer groove wall (52s) is a reference position (PB) of the first shoulder circumferential groove (30s1),
a distance (L1) in the axial direction from the reference position (PB) of the first shoulder circumferential groove (30s1) to the first boundary end (PS) is not less than 3 mm, and
a ratio (L1/WS1) of the distance (L1) in the axial direction to a ground-contact width (WS1) of the first shoulder land portion (32s1) is not greater than 20%.

3. The tire (2) according to claim 1 or 2, wherein, in a meridian cross-section of the tire (2), a distance in the axial direction from an equator plane (CL) to the boundary (48) between the outer cap portion (44) and the inner cap portion (46) gradually increases from the first boundary end (PS) toward the second boundary end (PU).

4. The tire (2) according to claim 3, wherein, in the meridian cross-section of the tire (2), an angle (θ) formed between a straight line (SU) passing through the first boundary end (PS) and the second boundary end (PU) and a tangent line (LT) tangent to the tread surface (14) at the first boundary end (PS) is not less than 5 degrees and not greater than 80 degrees.

5. The tire (2) according to one of claims 1 to 4, wherein the 300% modulus (Ms) of the outer cap portion (44) is not less than 8.0 MPa.

6. The tire (2) according to one of claims 1 to 5, wherein the 300% modulus (Mu) of the inner cap portion (46) is not greater than 7.0 MPa.

7. The tire (2) according to one of claims 1 to 6, wherein a ratio of the 300% modulus (Ms) of the outer cap portion (44) to the 300% modulus (Mu) of the inner cap portion (46) is not less than 1.1.

8. The tire (2) according to one of claims 1 to 7, wherein, in a meridian cross-section of the tire (2), a contour line of the boundary (48) between the outer cap portion (44) and the inner cap portion (46) is curved toward the base portion (20) side.

9. The tire (2) according to one of claims 2 to 8, wherein, in a meridian cross-section of the tire (2), positions of the first boundary end (PS) and the second boundary end (PU) coincide with each other in the axial direction.

## Patentansprüche

1. Reifen (2), der ein Profil (4) umfasst, welches sich in einer Umfangsrichtung erstreckt und eine äußere Umfangsfläche aufweist, die eine Lauffläche (14) ist, wobei
das Profil (4) mehrere Umfangsrillen (30) aufweist, die in einer Axialrichtung ausgerichtet sind und das Profil (4) in mehrere Landabschnitte (32) teilen,
die mehreren Umfangsrillen (30) eine erste Schulterumfangsrille (30s1), die auf einer Außenseite in einer Querrichtung eines Fahrzeugs angeordnet ist, wenn der Reifen (2) an dem Fahrzeug angebracht ist, und eine zweite Schulterumfangsrille (30s2) umfassen, die auf einer Innenseite in der Querrichtung des Fahrzeugs angeordnet ist, wenn der Reifen (2) an dem Fahrzeug angebracht ist,
der Landabschnitt (32), der in der Axialrichtung außerhalb der ersten Schulterumfangsrille (30s1) angeordnet ist, ein erster Schulterlandabschnitt (32s1) ist,
der Landabschnitt (32), der in der Axialrichtung außerhalb der zweiten Schulterumfangsrille (30s2) angeordnet ist, ein zweiter Schulterlandabschnitt (32s2) ist,
das Profil (4) einen Kappenabschnitt (18), der ausgebildet ist, mit einer Straßenoberfläche in Kontakt zu gelangen, und einen Basisabschnitt (20) umfasst, der radial innerhalb des Kappenabschnitts (18) angeordnet ist und durch den Kappenabschnitt (18) abgedeckt ist,
der Kappenabschnitt (18) einen äußeren Kappenabschnitt (44), der auf der Außenseite in der Querrichtung des Fahrzeugs angeordnet ist, wenn der Reifen (2) an dem Fahrzeug angebracht ist, und einen inneren Kappenabschnitt (46) umfasst, der auf der Innenseite in der Querrichtung des Fahrzeugs angeordnet ist, wenn der Reifen (2) an dem Fahrzeug angebracht ist, und
der erste Schulterlandabschnitt (32s1) eine Begrenzung (48) zwischen dem äußeren Kappenabschnitt (44) und dem inneren Kappenabschnitt (46) aufweist,
**dadurch gekennzeichnet, dass**
ein 300%-Modul (Mu) des inneren Kappenabschnitts (46) nicht kleiner als 5,0 MPa ist,
ein 300%-Modul (Ms) des äußeren Kappenabschnitts (44) größer als der 300%-Modul (Mu) des inneren Kappenabschnitts (46) und nicht größer als 9,0 MPa ist,
wobei der 300%-Modul die Zugspannung bei einer Elongation von 300% bedeutet, welche in JIS K6251 spezifiziert ist, als ein 300%-Modul bei 100°C repräsentiert wird und gemäß den Standards des JIS K6251 gemessen wird, indem ein Teststück aus dem Reifen (2) derart entnommen wird, dass dessen Längsrichtung mit der Umfangsrichtung des Reifens (2) zusammenfällt, oder indem ein Teststück aus einem plattenförmigen quervernetzten Gummi entnommen wird, das erhalten wird, indem eine Gummizusammensetzung, die zum Bilden der zu messenden Komponente verwendet wird, unter Druck gesetzt und für 12 Minuten auf eine Temperatur von 170°C aufgeheizt wird.

2. Reifen (2) nach Anspruch 1, wobei
ein Ende der Begrenzung (48) zwischen dem äußeren Kappenabschnitt (44) und dem inneren Kappenabschnitt (46) auf der Seite der Lauffläche (14) ein erstes Begrenzungsende (PS) ist,
ein Ende der Begrenzung (48) auf der Seite des Basisabschnitts (20) ein zweites Begrenzungsende (PU) ist,
die erste Schulterumfangsrille (30s1) einen Rillenboden (50), eine äußere Rillenwand (52s), die in der Axialrichtung auf einer Außenseite angeordnet ist, und eine innere Rillenwand (52u) umfasst, die in der Axialrichtung auf einer Innenseite angeordnet ist,
eine Begrenzung zwischen dem Rillenboden (50) und der äußeren Rillenwand (52s) eine Referenzposition (PB) der ersten Schulterumfangsrille (30s1) ist,
eine Distanz (L1) in der Axialrichtung von der Referenzposition (PB) der ersten Schulterumfangsrille (30s1) bis zu dem ersten Begrenzungsende (PS) nicht kleiner als 3 mm ist und
ein Verhältnis (L1/WS1) der Distanz (L1) in der Axialrichtung zu einer Bodenkontaktbreite (WS1) des ersten Schulterlandabschnitts (32s1) nicht größer als 20% ist.

3. Reifen (2) nach Anspruch 1 oder 2, wobei in einem Meridianquerschnitt des Reifens (2) eine Distanz in der Axialrichtung von einer Äquatorebene (CL) bis zu der Begrenzung (48) zwischen dem äußeren Kappenabschnitt (44) und dem inneren Kappenabschnitt (46) von dem ersten Begrenzungsende (PS) bis zu dem zweiten Begrenzungsende (PU) allmählich zunimmt.

4. Reifen (2) nach Anspruch 3, wobei in dem Meridianquerschnitt des Reifens (2) ein Winkel (θ), der zwischen einer geraden Linie (SU), die durch das erste Begrenzungsende (PS) und das zweite Begrenzungsende (PU) verläuft, und einer Tangentenlinie (LT), welche die Lauffläche (14) an dem ersten Begrenzungsende (PS) berührt, nicht kleiner als 5 Grad und nicht größer als 80 Grad ist.

5. Reifen (2) nach einem der Ansprüche 1 bis 4, wobei der 300%-Modul (Ms) des äußeren Kappenabschnitts (44) nicht kleiner als 8,0 MPa ist.

6. Reifen (2) nach einem der Ansprüche 1 bis 5, wobei der 300%-Modul (Mu) des inneren Kappenabschnitts (46) nicht größer als 7,0 MPa ist.

7. Reifen (2) nach einem der Ansprüche 1 bis 6, wobei ein Verhältnis des 300%-Modul (Ms) des äußeren Kappenabschnitts (44) zu dem 300%-Modul (Mu) des inneren Kappenabschnitts (46) nicht kleiner als 1,1 ist.

8. Reifen (2) nach einem der Ansprüche 1 bis 7, wobei in einem Meridianquerschnitt des Reifens (2) eine Konturlinie der Begrenzung (48) zwischen dem äußeren Kappenabschnitt (44) und dem inneren Kappenabschnitt (46) in Richtung der Seite des Basisabschnitts (20) gekrümmt ist.

9. Reifen (2) nach einem der Ansprüche 2 bis 8, wobei in einem Meridianquerschnitt des Reifens (2) Positionen des ersten Begrenzungsendes (PS) und des zweiten Begrenzungsendes (PU) in der Axialrichtung miteinander zusammenfallen.

## Revendications

1. Pneumatique (2) comprenant une bande de roulement (4) s'étendant dans une direction circonférentielle et ayant une surface circonférentielle extérieure qui est une surface de bande de roulement (14), dans lequel
la bande de roulement (4) a une pluralité de rainures circonférentielles (30) alignées dans une direction axiale et divisant la bande de roulement (4) en une pluralité de portions en relief (32),
la pluralité de rainures circonférentielles (30) incluent une première rainure circonférentielle d'épaulement (30s1) située sur un côté extérieur dans une direction de la largeur d'un véhicule quand le pneumatique (2) est monté sur le véhicule, et une seconde rainure circonférentielle d'épaulement (30s2) située sur un côté intérieur dans la direction de la largeur du véhicule quand le pneumatique (2) est monté sur le véhicule,
la portion en relief (32) située à l'extérieur de la première rainure circonférentielle d'épaulement (30s1) dans la direction axiale est une première portion en relief d'épaulement (32s1),
la portion en relief (32) située à l'extérieur de la seconde rainure circonférentielle d'épaulement (30s2) dans la direction axiale est une seconde portion en relief d'épaulement (32s2),
la bande de roulement (4) inclut une portion de chape (18) configurée pour venir en contact avec une surface routière, et une portion de base (20) située radialement à l'intérieur de la portion de chape (18) et recouverte avec la portion de chape (18),
la portion de chape (18) inclut une portion de chape extérieure (44) située sur le côté extérieur dans la direction de la largeur du véhicule quand le pneumatique (2) est monté sur le véhicule, et une portion de chape intérieure (46) située sur le côté intérieur dans la direction de la largeur du véhicule quand le pneumatique (2) est monté sur le véhicule, et
la première portion en relief d'épaulement (32s1) inclut une frontière (48) entre la portion de chape extérieure (44) et la portion de chape intérieure (46),
**caractérisé en ce que**
un module à 300 % (Mu) de la portion de chape intérieure (46) n'est pas inférieur à 5,0 MPa,
un module à 300 % (Ms) de la portion de chape extérieure (44) est supérieur au module à 300 % (Mu) de la portion de chape intérieure (46), et n'est pas supérieur à 9,0 MPa,
dans lequel le module à 300 % signifie la résistance à la traction à un allongement de 300 % spécifié dans la norme industrielle japonaise JIS K6251, est représenté en tant que module à 300 % à 100 °C et est mesuré selon les standards de la norme industrielle japonaise JIS K6251 par échantillonnage d'une pièce d'essai provenant du pneumatique (2) de telle sorte que la direction de la longueur de celle-ci coïncide avec la direction circonférentielle du pneumatique (2), ou par échantillonnage d'une pièce d'essai provenant d'un caoutchouc réticulé en forme de feuille obtenu en pressurisant et en chauffant une composition de caoutchouc, qui est utilisé pour former le composant à mesurer, à une température de 170 °C pendant 12 minutes.

2. Pneumatique (2) selon la revendication 1, dans lequel
une extrémité, sur le côté de la surface de bande de roulement (14), de la frontière (48) entre la portion de chape extérieure (44) et la portion de chape intérieure (46) est une première extrémité de frontière (PS),
une extrémité, sur le côté de la portion de base (20), de la frontière (48) est une seconde extrémité de frontière (PU),
la première rainure circonférentielle d'épaulement (30s1) inclut un fond de rainure (50), une paroi de rainure extérieure (52s) située sur un côté extérieur dans la direction axiale, et une paroi de rainure intérieure (52u) située sur un côté intérieur dans la direction axiale,
une frontière entre le fond de rainure (50) et la paroi de rainure extérieure (52s) est une position de référence (PB) de la première rainure circonférentielle d'épaulement (30s1),
une distance (L1) dans la direction axiale depuis la position de référence (PB) de la première rainure circonférentielle d'épaulement (30s1) jusqu'à la première extrémité de frontière (PS) n'est pas inférieure à 3 mm, et
un rapport (L1/WS1) de la distance (L1) dans la direction axiale sur une largeur de contact au sol (WS1) de la première portion en relief d'épaulement (32s1) n'est pas supérieur à 20 %.

3. Pneumatique (2) selon la revendication 1 ou 2, dans lequel, dans une section transversale méridienne du pneumatique (2), une distance dans la direction axiale depuis un plan d'équateur (CL) jusqu'à la frontière (48) entre la portion de chape extérieure (44) et la portion de chape intérieure (46) augmente graduellement depuis la première extrémité de frontière (PS) vers la seconde extrémité de frontière (PU).

4. Pneumatique (2) selon la revendication 3, dans lequel, dans la section transversale méridienne du pneumatique (2), un angle (θ) formé entre une ligne droite (SU) passant par la première extrémité de frontière (PS) et la seconde extrémité de frontière (PU) et une ligne tangente (LT) tangente à la surface de bande de roulement (14) au niveau de la première extrémité de frontière (PS) n'est pas inférieur à 5 degrés et n'est pas supérieur à 80 degrés.

5. Pneumatique (2) selon l'une des revendications 1 à 4, dans lequel le module à 300 % (Ms) de la portion de chape extérieure (44) n'est pas inférieur à 8,0 MPa.

6. Pneumatique (2) selon l'une des revendications 1 à 5, dans lequel le module à 300 % (Mu) de la portion de chape intérieure (46) n'est pas supérieur à 7,0 MPa.

7. Pneumatique (2) selon l'une des revendications 1 à 6, dans lequel un rapport du module à 300 % (Ms) de la portion de chape extérieure (44) sur le module à 300 % (Mu) de la portion de chape intérieure (46) n'est pas inférieur à 1,1.

8. Pneumatique (2) selon l'une des revendications 1 à 7, dans lequel, dans une section transversale méridienne du pneumatique (2), une ligne de contour de la frontière (48) entre la portion de chape extérieure (44) et la portion de chape intérieure (46) est incurvée vers le côté de la portion de base (20).

9. Pneumatique (2) selon l'une des revendications 2 à 8, dans lequel, dans une section transversale méridienne du pneumatique (2), des positions de la première extrémité de frontière (PS) et de la seconde extrémité de frontière (PU) coïncident l'une avec l'autre dans la direction axiale.
